# DEMANDE DE BREVET EUROPEEN

(11) **EP 4 382 980 A1**
(43) Date de publication de la demande: **12.06.2024**
(21) Numéro de dépôt: 23212889.2
(22) Date de dépôt: 29.11.2023
(51) Int. Cl.: G02B 6/293, G01P 15/093, G01P 15/097

(54) **DISPOSITIF PHOTONIQUE ISOLE MECANIQUEMENT D'UN SUBSTRAT**

(30) Priorité: 08.12.2022 FR 2212954
(71) Demandeur: Commissariat à l'énergie atomique et aux énergies alternatives, 75015 Paris (FR)
(72) Inventeur: JOURDAN, Guillaume, 38054 GRENOBLE CEDEX 09 (FR); GELY, Marc, 38054 GRENOBLE CEDEX 09 (FR)
(74) Mandataire: Cabinet Beaumont

(57) **Abrégé**

La présente description concerne un dispositif photonique (1) comprenant un substrat (100) et une structure (102). La structure (102) comprend un support (104), un résonateur optique (124) fixé au support (104) et une portion (116) d'un guide d'onde (118) couplée optiquement au résonateur (124) et fixée au support (104). La structure (102) est suspendue au-dessus du substrat (100). La portion (116) du guide d'onde (118) et le résonateur (124) sont disposés d'un même côté du support (104). Le support (104) est une première partie d'une couche (106). Une deuxième partie (112) de la couche (106) est fixée au substrat (100). Le support (104) est couplé mécaniquement à la deuxième partie (112) de la couche (106).

## Description

### Domaine technique

La présente description concerne de façon générale les circuits intégrés, et, plus particulièrement, les circuits intégrés photoniques.

### Technique antérieure

Des circuits photoniques connus comprennent un guide d'onde et un résonateur optique couplés optiquement l'un à l'autre. Le résonateur optique est, par exemple, un disque, un anneau circulaire, un anneau oblong en forme de piste d'athlétisme ou encore une structure à cristaux photoniques telle qu'une structure à miroirs de Bragg. Dans ces circuits connus, le guide d'onde et le résonateur optique sont définis dans une même couche, et sont fixés chacun au substrat du circuit photonique. L'espace de couplage optique entre le guide d'onde et le résonateur optique est vide, c'est à dire qu'il n'est pas rempli d'un matériau solide.

Dans de tels circuits, un changement du matériau (liquide ou gazeux) qui se trouve dans l'espace de couplage optique entre le guide d'onde et le résonateur influence directement les propriétés du couplage entre le guide d'onde et le résonateur. Ces circuits sont donc sensibles aux variations d'indice optique dans l'espace de couplage entre le guide d'onde et le résonateur et peuvent donc, par exemple, servir de capteurs.

Toutefois, cela implique de maintenir constant l'espace de couplage entre le guide d'onde et le résonateur. Or, lorsque le substrat auquel sont fixés le résonateur et le guide d'onde se déforme, cela entraîne une modification de l'espace de couplage optique entre le guide d'onde et le résonateur, ce qui rend le circuit inopérant ou sensible à un signal parasite.

Dans de tels circuits, on peut par ailleurs prévoir qu'un élément mécanique mobile soit disposé à proximité du résonateur optique, et soit séparé de ce dernier par un espace vide de matériau solide. L'élément mobile est couplé mécaniquement au substrat par des éléments de liaison souples déformables, de sorte que l'élément mécanique puisse se déplacer par rapport au substrat. Lorsque l'élément mécanique se déplace, cela entraîne une modification de l'espace vide entre l'élément mécanique et le résonateur, et donc une modification de l'indice optique effectif du résonateur et ainsi de sa longueur d'onde de résonance. Cela permet de mesurer le déplacement de l'élément mécanique, par exemple pour mesurer une accélération ayant entraîné le déplacement de l'élément mécanique.

Toutefois, lorsque le substrat auquel est fixé le résonateur et est couplé l'élément mécanique se déforme, cela entraîne une modification de l'espace entre l'élément mobile et le résonateur, ce qui fausse la mesure.

Ainsi, dans de nombreux circuits photoniques connus, il serait souhaitable qu'au moins un espace vide entre des éléments optiques et/ou mécaniques du circuit photonique ne soit pas modifié par des déformations du substrat.

### Résumé de l'invention

Il existe un besoin de pallier tout ou partie des inconvénients des circuits photoniques connus, par exemple des circuits photoniques connus décrits ci-dessus.

Par exemple, il existe un besoin de pallier tout ou partie des inconvénients des circuits photoniques connus comprenant un guide d'onde et un résonateur optique couplés optiquement l'un à l'autre par un espace vide, ces circuits photoniques pouvant en outre comprendre un élément mécanique mobile dont les déplacements modifient les propriétés optiques du résonateur optique ou le couplage optique entre le résonateur et le guide d'onde.

Un mode de réalisation pallie tout ou partie des inconvénients des circuits photoniques connus, par exemple des circuits photoniques connus décrits ci-dessus.

Par exemple, un mode de réalisation pallie tout ou partie des inconvénients des circuits photoniques connus comprenant un guide d'onde et un résonateur optique couplés optiquement l'un à l'autre par un espace vide, ces circuits photoniques pouvant en outre comprendre un élément mécanique mobile dont les déplacements modifient les propriétés optiques du résonateur optique ou le couplage entre le résonateur et le guide d'onde.

Un mode de réalisation prévoit un dispositif photonique comprenant :
un substrat ; et
une structure comprenant un support, un résonateur optique fixé au support et une portion d'un guide d'onde, la portion du guide d'onde étant couplée optiquement au résonateur optique, dans lequel :
   la portion du guide d'onde est fixée au support ;
   la structure est suspendue au-dessus du substrat ;
   la portion du guide d'onde et le résonateur sont disposés d'un même côté du support, par exemple sous le support ;
   le support correspond à une première partie d'une première couche ;
   une deuxième partie de la première couche est fixée au substrat ; et
   le support est couplé mécaniquement à la deuxième partie de la première couche.

Selon un mode de réalisation, le couplage mécanique du support à la deuxième partie de la première couche comprend :
- une connexion du support à une première région de la deuxième partie de la première couche ; et/ou
- au moins une troisième partie de la première couche suspendue au-dessus du substrat et étant connectée d'une part à une deuxième région de la deuxième partie de la première couche et d'autre part au support.

Selon un mode de réalisation, le couplage mécanique du support à la deuxième partie de la première couche comprend la connexion du support à la première région de la deuxième partie de la première couche et est dépourvu de troisième partie de la première couche, ladite connexion mettant en oeuvre une liaison rigide entre le support et la deuxième partie de la première couche.

Selon un mode de réalisation, le couplage mécanique du support à la deuxième partie de la première couche comprend ladite au moins une troisième partie de la première couche et est dépourvu de connexion entre le support et la deuxième partie de la première couche, ladite au moins une troisième partie de la première couche comprenant :
* plusieurs troisièmes parties mettant chacune en oeuvre une liaison souple entre le support et la deuxième partie de la première couche, ou
* plusieurs troisièmes parties, une seule desdites troisièmes parties mettant en oeuvre une liaison rigide ou semi-rigide entre le support et la deuxième partie de la première couche, et les autres troisièmes parties mettant chacune en oeuvre une liaison souple entre le support et la deuxième partie de la première couche, ou
* une seule troisième partie mettant en oeuvre une liaison rigide ou semi-rigide entre le support et la deuxième partie de la première couche.

Selon un mode de réalisation, le couplage mécanique du support à la deuxième partie de la première couche comprend la connexion du support à la première région de la deuxième partie de la première couche et ladite au moins une troisième partie de la première couche, ladite connexion mettant en oeuvre une liaison rigide entre le support et la première région de la deuxième partie de la première couche, et chaque troisième partie de la première couche mettant en oeuvre une liaison souple entre le support et la deuxième région de la deuxième partie de la première couche.

Selon un mode de réalisation, le guide d'onde et le résonateur sont définis dans une même troisième couche.

Selon un mode de réalisation, la portion du guide d'onde est fixée au support par des bras définis dans la troisième couche, chacun desdits bras ayant une extrémité en contact avec la portion du guide d'onde et une extrémité fixée au support.

Selon un mode de réalisation :
le guide d'onde comprend une autre portion ne faisant pas partie de la structure et étant, de préférence, disposée au-delà de la structure ; et
des bras définis dans la troisième couche comprennent chacun une extrémité en contact avec cette autre portion du guide d'onde disposée au-delà de la structure et une extrémité fixée au substrat.

Selon un mode de réalisation :
le support comprend au moins une partie de découplage ;
le support comprend des liaisons souples ou semi-rigides reliant ladite au moins une partie de découplage à une partie du support qui est couplée mécaniquement à la deuxième partie de la première couche ; et
au moins le résonateur est couplée mécaniquement plus directement à ladite au moins une partie de découplage qu'à la partie du support qui est couplée mécaniquement à la deuxième partie de la première couche.

Selon un mode de réalisation, la structure comprend une partie mobile, ladite partie mobile étant couplée mécaniquement plus directement à ladite au moins une partie de découplage qu'à la partie du support qui est couplée mécaniquement à la deuxième partie de la première couche.

Selon un mode de réalisation, la structure comprend une partie mobile par rapport à une partie du support qui est couplée mécaniquement à la deuxième partie de la première couche.

Selon un mode de réalisation :
la partie mobile de la structure est une partie mobile du support ;
parmi le résonateur et la portion du guide d'onde faisant partie de la structure, l'un est fixé à la partie mobile du support et l'autre est fixé à une autre partie du support ; et
la structure est configurée pour qu'un déplacement de la partie mobile de la structure dans une direction parallèle au substrat entraîne une modification correspondante du couplage optique entre ladite portion de guide d'onde et le résonateur.

Selon un mode de réalisation :
la partie mobile de la structure comprend une partie mobile du support ;
la portion du guide d'onde faisant partie de la structure et le résonateur sont fixés à une autre partie du support que la partie mobile du support ;
la partie mobile du support comprend une région disposée en vis-à-vis d'une partie du résonateur dans une direction orthogonale au substrat ; et
la structure est configurée pour qu'un déplacement de la partie mobile de la structure dans la direction orthogonale au substrat entraine une variation correspondante d'indice effectif du résonateur.

Selon un mode de réalisation :
la partie mobile de la structure comprend un empilement comprenant une portion de la troisième couche et une partie mobile du support ; et
dans une direction parallèle au substrat, ladite portion de la troisième couche est séparée du résonateur par un espace configuré pour qu'un déplacement de la partie mobile de la structure dans cette direction entraine une variation correspondante d'indice optique effectif du résonateur.

Selon un mode de réalisation, la partie mobile du support est couplée mécaniquement au reste du support par des liaisons souples au moins en partie définies dans la première partie de la première couche.

Selon un mode de réalisation :
la partie mobile de la structure est définie dans la troisième couche ; et
dans une direction parallèle au substrat, la partie mobile de la structure est séparée du résonateur par un espace configuré pour qu'un déplacement de la partie mobile de la structure dans cette direction entraine une variation correspondante d'indice optique effectif du résonateur.

Selon un mode de réalisation, la partie mobile de la structure est couplée mécaniquement au support par au moins une portion de la troisième couche, ladite au moins une portion étant moins rigide que la partie mobile.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, par une vue de dessus schématique, un exemple de mode de réalisation d'un circuit photonique ;
la figure 2 représente, par une vue en coupe schématique, le circuit de la figure 1 pris dans le plan de coupe AA de la figure 1 ;
la figure 3 représente, par une vue en coupe schématique, le circuit de la figure 1 pris dans le plan de coupe BB de la figure 1 ;
la figure 4 représente, par une vue en coupe schématique, le circuit de la figure 1 pris dans le plan de coupe CC de la figure 1 ;
la figure 5 représente, par une vue de dessus schématique, un exemple d'une variante de réalisation du circuit photonique de la figure 1 ;
la figure 6 représente, par une vue de dessus schématique, un exemple d'une autre variante de réalisation du circuit photonique de la figure 1 ;
la figure 7 représente, par une vue en coupe schématique, le circuit de la figure 6 pris dans le plan de coupe AA de la figure 6 ;
la figure 8 représente, par une vue de dessus schématique, un exemple d'encore une autre variante de réalisation du circuit photonique de la figure 1 ;
la figure 9 représente, par une vue en coupe schématique, le circuit de la figure 8 pris dans le plan de coupe AA de la figure 8 ;
la figure 10 représente, par une vue de dessus schématique, un exemple d'encore une autre variante de réalisation du circuit photonique de la figure 1 ;
la figure 11 représente, par une vue de dessus schématique, un exemple d'encore une autre variante de réalisation du circuit photonique de la figure 1 ;
la figure 12 représente, par une vue de dessus schématique, un exemple d'encore une autre variante de réalisation du circuit photonique de la figure 1 ;
la figure 13 représente, par une vue de dessus schématique, un exemple de mode de réalisation d'une partie du circuit photonique des figures 1 à 12 ;
la figure 14 représente une vue en coupe schématique prise dans le plan de coupe AA de la figure 13 ;
la figure 15 représente, par une vue de dessus schématique, un exemple d'une variante de réalisation d'une partie du circuit photonique des figures 1 à 14 ; et
la figure 16 représente, par une vue de dessus schématique, un exemple d'une autre variante de réalisation d'une partie du circuit photonique des figures 1 à 14.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les procédés de fabrication des circuits photoniques décrits ici n'ont pas été détaillés, la fabrication des modes de réalisation et variantes de ces circuits photoniques à partir d'étapes usuelles de fabrication des circuits photoniques connus étant à la portée de la personne du métier à partir la description ci-dessous.

Sauf précision contraire, lorsque l'on fait référence à deux éléments connectés mécaniquement entre eux, cela signifie directement en contact sans éléments intermédiaires, et lorsque l'on fait référence à deux éléments reliés ou couplés (en anglais "coupled") mécaniquement entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Afin de s'affranchir des inconvénients des circuits photoniques connus, par exemple des circuits photoniques connus décrits précédemment, il est ici proposé un circuit photonique comprenant une structure suspendue au-dessus du substrat du circuit photonique. La structure suspendue comprend un support et des éléments optiques et/ou mécaniques entre lesquels on souhaite maintenir un ou plusieurs espaces vides ayant des dimensions indépendantes des déformations du substrat. Ces éléments optiques et/ou mécaniques sont alors fixés au support de la structure suspendue plutôt qu'au substrat. Ainsi, lorsque le substrat se déforme, les positions relatives de ces éléments optiques et/ou mécaniques n'en sont pas affectées, bien que le support de la structure soit couplé mécaniquement au substrat de sorte que la structure soit suspendue au-dessus du substrat.

Sauf indication contraire, lorsque l'on fait référence à un élément ancré (en anglais "anchored"), fixé (en anglais "fixed"), attaché (en anglais "attached") ou accroché (en anglais "hooked") au support, cela signifie que cet élément est couplé mécaniquement au support, lui-même étant couplé au substrat. Par exemple, dit autrement, cela signifie que cet élément est couplé mécaniquement au substrat par l'intermédiaire du support. Par exemple, dit encore autrement, cela signifie que la liaison mécanique entre cet élément et le support est plus courte (ou plus directe) que chaque liaison mécanique que cet élément a avec le substrat.

De manière symétrique, sauf indication contraire, lorsque l'on fait référence à un élément ancré, fixé, attaché ou accroché au substrat, cela signifie que cet élément est couplé mécaniquement au substrat, lui-même étant couplé au support. Par exemple, dit autrement, cela signifie que cet élément est couplé au support par l'intermédiaire du substrat. Par exemple, dit encore autrement, cela signifie que la liaison mécanique entre cet élément et le substrat est plus courte (ou plus directe) que chaque liaison mécanique que cet élément a avec le support.

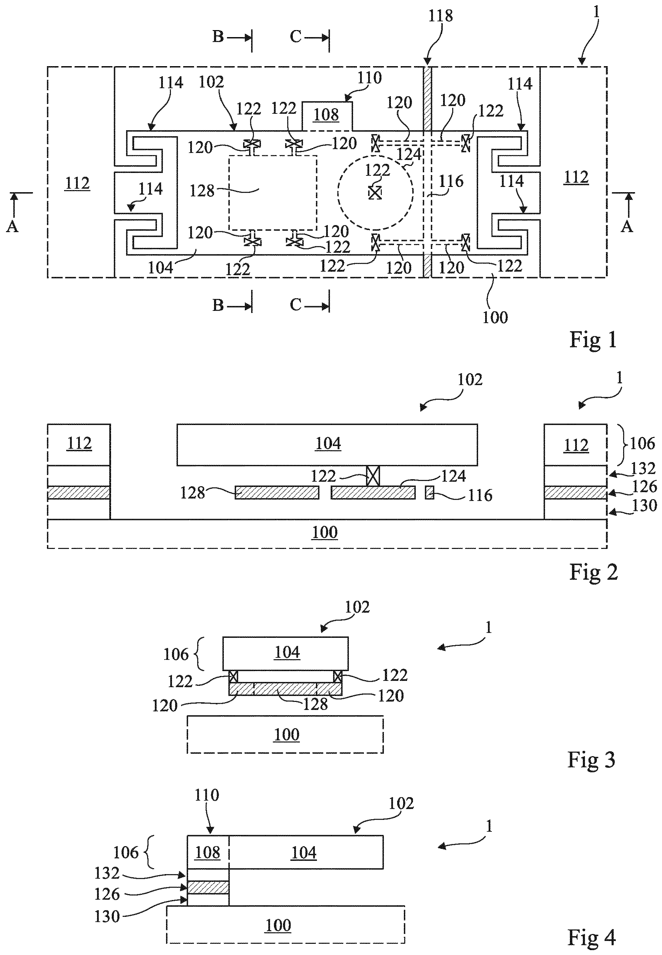

La figure 1 illustre, par une vue de dessus schématique, un exemple de mode de réalisation d'un circuit photonique 1, la figure 2 étant une vue en coupe schématique prise dans le plan de coupe AA de la figure 1, la figure 3 étant une vue en coupe schématique prise dans le plan de coupe BB de la figure 1 et la figure 4 étant une vue en coupe schématique prise dans le plan de coupe CC de la figure 1.

Le circuit 1 comprend un substrat 100, par exemple un substrat semiconducteur, par exemple en silicium. Dit autrement, le circuit 1 est formé sur le substrat 100.

Le circuit ou dispositif 1 comprend une structure 102. La structure 102 est suspendue au-dessus du substrat 100. Plus particulièrement, la structure 102 comprend un support 104. Le support 104 est suspendu au-dessus du substrat 100. Le support 104 correspond à une première partie (ou portion) d'une couche 106, par exemple en silicium, et la couche 106 comprend une deuxième partie fixée au support, les première et deuxième parties de la couche 106 étant couplées mécaniquement l'une à l'autre. Dit autrement, la deuxième partie de la couche 106 repose sur le substrat 100 auquel elle est fixée, par exemple par l'intermédiaire d'un empilement de couches connectées entre elles deux à deux, et le couplage mécanique des première et deuxième parties de la couche 106 entre elles permet de maintenir la première partie de la couche 106 (support 104) suspendue au-dessus du substrat.

Selon un mode de réalisation, comme cela est illustré dans l'exemple des figures 1 à 4, la deuxième partie de la couche 106 comprend une première région 108 en contact avec, ou connectée à, au support 104. Cette région 108 est fixée au substrat 100, par exemple par l'intermédiaire d'un empilement de couches connectées entre elles deux à deux. Cette région 108 a, par exemple, des dimensions prises dans un plan parallèle au substrat 100 qui sont plus faibles, par exemple au moins cinq fois plus faibles, de préférence au moins dix fois plus faibles, que celles du support 104. Dans l'exemple des figures 1 à 4, la région 108 est disposée contre et en contact avec un bord rectiligne du support 104. Dans d'autres exemples non illustrés, la région 108 est entourée par le support 104, par exemple quand la région 108 est disposée dans une partie centrale du support 104, toute ou partie de la périphérie de la région 108 étant alors en contact avec le support 104. En figures 1 et 4, la limite entre la région 108 et la périphérie du support 104 est indiquée par des traits en pointillés.

Selon un mode de réalisation, la région 108 fait partie d'un plot d'ancrage 110 du support 104 au substrat 100. Le plot 110 comprend une partie connectée à, et en contact avec, le support 104 et une autre partie connectée à, et en contact avec, le substrat 100. La connexion du plot 110 au support 104 met en oeuvre une liaison mécanique rigide du support 104 à la région 108 de la couche 106, donc une liaison mécanique rigide du support 104 au substrat 100, du fait que la raideur de cette liaison est sensiblement égale, voire supérieure, à celle du support, par exemple sensiblement égale, voire supérieure, à celle de la partie du support 104 à laquelle est connecté le plot 110.

Le plot 110 permet la mise en oeuvre d'une fonction passe-bas pour la transmission des vibrations du substrat 100 vers le support 104. Par exemple, en appelant Kar la raideur de la liaison mécanique entre le plot 110 et le support 104 et m la masse de la structure 102, la fréquence de coupure fc1 de cette fonction passe-bas est égale à (Kar/m)^{0,5}. En dimensionnant le plot 110 pour obtenir une valeur désirée de raideur Kar, il est possible de filtrer des perturbations extérieures telles que, par exemple, des vibrations du substrat 100 et/ou des déformation du substrat 100.

De préférence, il n'y a pas plus d'un plot d'ancrage rigide 110 du support 104 au substrat 100. Ainsi, lorsque le substrat 100 se déforme, cela peut entraîner un déplacement du plot 110 qui est fixé au substrat 100, et donc un déplacement du support 104 qui est également fixé au plot 110, mais cela n'entraîne pas de déformation correspondante du support 104.

Selon un mode de réalisation, comme cela est illustré dans l'exemple des figures 1 à 4, la deuxième partie de la couche 106 comprend au moins une deuxième région 112 couplée au support 104. Chaque région 112 est fixée au substrat 100, par exemple par l'intermédiaire d'un empilement de couches connectées entre elles deux à deux. Dans un tel mode de réalisation, la couche 106 comprend en outre au moins une troisième partie 114, par exemple quatre parties 114 dans l'exemple de la figure 1, reliant chacune le support 104 à une région 112 de la couche 106. Dit autrement, chaque partie 114 de la couche 106 a une extrémité connectée à, et en contact avec, le support 104, et une autre extrémité fixée à, et en contact avec, une région 112 de la couche 106. Dans l'exemple des figures 1 à 4, chaque partie 114 de la couche 106 s'étend entre la périphérie du support 104 et la région 112 de la couche 106. Dans d'autres exemples non illustrés, le support 104 est traversé par une ouverture à l'intérieur de laquelle est disposée la région 112 de la couche 106, et chaque partie 114 de la couche 106 s'étend depuis la région 112 jusqu'au support 104.

De préférence, en appelant Lmax la plus grande dimension du support 104 prise dans un plan parallèle au substrat 100, la distance maximale entre chaque région 112 de la couche 106 et le support 104 prise dans un plan parallèle au substrat 100 est inférieure à 3*Lmax/2.

Selon un mode de réalisation, chaque partie 114 de la couche 106 met en oeuvre, ou fait partie, d'une liaison souple du support 104 à une région 112 de la couche 106. Dans ce cas, chaque partie 114 de la couche 106 est par exemple configurée pour être moins rigide que le support 104, par exemple moins rigide la partie du support 104 avec laquelle la liaison 114 est en contact. Une liaison 114 est dite souple, par exemple car sa raideur est plus faible, par exemple au moins 10 fois plus faible, que celle du support 104 et, de préférence, que celle de la partie du support 104 à laquelle est connectée la liaison 114. La liaison 114 est dite souple, par exemple, car elle est moins rigide que la connexion mécanique entre le plot d'ancrage 110 et le support 104. La personne du métier est en mesure de mettre en oeuvre les liaisons souples du support 104 à la région 112 de la couche 106. Par exemple, chaque partie 114 de la couche 106 a la forme d'une poutre, ou d'une pluralité de poutres mises bout à bout pour former au moins un méandre, chaque poutre ayant, dans un plan parallèle au substrat 100, une dimension transversale inférieure aux dimensions transversales du support 104 et, de préférence, aux dimensions transversales de la périphérie du support 104.

De préférence, il y a au moins deux liaisons souples reliant le support 104 à la région 112 de la couche 106. Par exemple, lorsque le support 104 a une forme périphérique rectangulaire, une liaison souple est prévue à chaque coin de la périphérie du support 104.

Ces liaisons souples du support 104 à une ou plusieurs régions 112 de la couche 106 permettent la mise en oeuvre d'une fonction passe-bas pour la transmission des vibrations ou des déformations du substrat 100 vers le support 104. Par exemple, la fréquence de coupure de cette fonction passe-bas est plus faible que la fréquence de coupure fc1 déterminée par la liaison mécanique entre le plot 110 et le support 104. La personne du métier comprendra que, dans une configuration où le dispositif 1 comprend des liaisons souples du support 104 à une ou plusieurs régions 112 de la couche 106, et, en outre, une liaison rigide entre le support 104 et un plot 110, la fréquence de la fonction de filtrage passe bas mise en oeuvre par ces liaisons souples et cette liaison rigide est alors imposée par la liaison rigide.

Ces liaisons souples du support 104 à la région 112 de la couche 106 permettent d'encaisser des déformations du substrat 100, de sorte qu'une déformation du substrat 100 n'entraîne pas de déformation correspondante du support 104.

Selon un mode de réalisation dans lequel le dispositif ne comprend pas de plot 110 connecté au support 104, chaque partie 114 de la couche 106 met en oeuvre, ou fait partie, d'une liaison souple du support 104 à une région 112 de la couche 106 comme cela a été décrit précédemment, à l'exception d'une partie 114 qui met en oeuvre, ou fait partie, d'une liaison rigide du support 104 à une région 112 ou d'une liaison de raideur intermédiaire entre la raideur des liaisons souples et la raideur d'une liaison rigide. Dit autrement, dans une configuration où le dispositif 1 ne comprend pas de liaison rigide du support 104 à un plot 100 mais ne comprend que des liaisons du support 104 à une ou plusieurs régions 112 de la couche 106, soit toutes ces liaisons sont souples et ont des raideurs similaires ou identiques, soit toutes ces liaisons sont souples et ont des raideurs similaires à l'exception d'une des liaisons qui a une raideur intermédiaire entre la raideur des liaisons souples et la raideur du support 104 ou qui a une raideur sensiblement égale à celle du support 104. C'est alors la plus rigide des liaisons du support 104 à une ou plusieurs régions 112 de la couche 106 qui détermine la fréquence de coupure de la fonction passe-bas mise en oeuvre par ces liaisons.

A titre d'exemple, chaque liaison souple 114 est configurée pour être moins rigide que le support 104, par exemple moins rigide la partie du support 104 avec laquelle la liaison souple 114 est en contact. De préférence, une liaison 114 est dite souple car sa raideur est plus faible, par exemple au moins 10 fois plus faible, que celle du support 104 et, de préférence, que celle de la partie du support 104 à laquelle est connectée la liaison 114. Une liaison 114 est dite souple, par exemple, car elle est moins rigide que la connexion mécanique entre le plot d'ancrage 110 et le support 104.

A titre d'exemple, lorsque les liaisons 114 du support 104 à une ou plusieurs régions 112 de la couche 106 sont toutes souples à l'exception d'une qui est rigide, l'unique liaison rigide 114 est par exemple configurée pour être sensiblement aussi rigide, voire plus rigide, que le support 104, par exemple sensiblement aussi rigide ou plus rigide que la partie du support 104 avec laquelle la liaison rigide 114 est en contact. Cette liaison 114 est dite rigide, par exemple car sa raideur est sensiblement égale, voire supérieure, à celle du support 104 et, de préférence, à celle de la partie du support 104 à laquelle est connectée la liaison rigide 114. Cette liaison 114 est dite rigide, par exemple, car elle est sensiblement aussi rigide, voire plus rigide, qu'une connexion mécanique entre un plot d'ancrage 110 et le support 104.

A titre d'exemple, lorsque les liaisons 114 du support 104 à une ou plusieurs régions 112 de la couche 106 sont toutes souples à l'exception d'une qui a une rigidité intermédiaire entre celle des liaisons souples et celle du support 104, l'unique liaison de rigidité intermédiaire 114 est, par exemple, configurée pour être sensiblement moins rigide que le support 104, par exemple moins rigide que la partie du support 104 avec laquelle la liaison de rigidité intermédiaire 114 est en contact, tout en restant plus rigide que les liaisons souples. Cette liaison 114 est dite de rigidité intermédiaire, par exemple car sa raideur est comprise entre celle du support 104, de préférence celle de la partie du support 104 à laquelle est connectée cette liaison, et celle des liaisons souples.

Un avantage de prévoir un dispositif 1 dépourvu de connexion rigide du support 104 à un plot 110, et comprenant des liaisons du support 104 à une ou plusieurs régions112 de la couche 106 qui sont toutes souples à l'exception d'une qui est de rigidité intermédiaire est que la fréquence de coupure de la fonction passe-bas mise en oeuvre par ces liaisons peut être adaptée en fonction de l'application visée en adaptant en conséquence la raideur de cette liaison de raideur intermédiaire.

La personne du métier est en mesure de mettre en oeuvre chaque liaison souple 114 du support 104 à une région 112 de la couche 106. Par exemple, chaque liaison souple 114 a la forme d'une poutre, ou d'une pluralité de poutres mises bout à bout pour former au moins un méandre, chaque poutre ayant, dans un plan parallèle au substrat 100, une dimension transversale inférieure aux dimensions transversales du support 104 et, de préférence, aux dimensions transversales de la périphérie du support 104. La personne du métier également est en mesure de mettre en oeuvre, lorsqu'une telle liaison est prévue, l'unique liaison rigide ou de rigidité intermédiaire du support 104 à une région 112 de la couche 106. Par exemple, cette liaison rigide ou semi-rigide 114 a la forme d'une poutre suffisamment large pour être plus rigide que les liaisons souples 114.

Ainsi, bien que la figure 1 illustre un exemple d'un mode de réalisation où le circuit 1 comprend des liaisons 114 qui sont toutes souples et un unique plot d'ancrage 110, dans des variantes de réalisation, le circuit 1 peut ne comprendre qu'un unique plot 110 sans liaison 114, ou peut ne comprendre que les liaisons souples 114 sans plot 110, ou encore peut ne comprendre que des liaisons 114 (sans plot 110) souples à l'exception d'une qui est rigide ou semi-rigide.

La structure suspendue 102 comprend en outre une portion 116 d'un guide d'onde 118. La portion 116 du guide d'onde 118 est disposée sous le support 104, c'est à dire entre le support 104 et le substrat 100.

La portion 116 du guide d'onde 118 est fixée au support 104. Plus particulièrement, la portion 116 est suspendue au-dessous du support 104. En figure 1, des éléments de la structure 102, dont la portion 116 du guide d'onde 118, qui sont disposés sous le support 104 sont représentés en pointillés.

Un espace vide sépare le support 104 de la portion 116 du guide d'onde 118. Par exemple, la portion 116 est fixée au support 104 par des bras de maintien 120 ayant chacun une extrémité connectée à, et en contact avec, la portion 116 du guide d'onde 118, et une autre extrémité fixée au support 104. Par exemple, dans chaque bras de maintien 120, l'extrémité du bras 120 fixée au support 104 est connectée à, et en contact avec, un plot d'ancrage 122 connecté entre le support 104 et le bras 120. En figure 1, les plots d'ancrage 122 sont représentés chacun par une croix.

La structure suspendue 102 comprend en outre un résonateur optique 124, par exemple un disque dans l'exemple de la figure 1, bien que, dans d'autres exemples non représentés, ce résonateur 124 puisse avoir d'autres formes ou être une structure à cristaux photoniques. Le résonateur 124 est disposée sous le support 104, c'est à dire entre le support 104 et le substrat 100.

Le résonateur 124 est fixé au support 104. Une partie du résonateur 124 est séparée du support par un espace vide, ou, dit autrement, une partie du résonateur 124 est suspendue sous le support 104. Par exemple, le résonateur 124 est fixé au support par au moins un plot d'ancrage 122 similaire à ceux utilisés pour fixer la portion 116 du guide d'onde 118 au support 104. Par exemple, chaque plot d'ancrage 122 a, dans un plan parallèle au substrat 100, des dimensions inférieures à celle du résonateur 124. De préférence, lorsque le résonateur a la forme d'un anneau ou d'un disque ou d'une boucle, chaque plot d'ancrage 122 est disposé dans une région délimitée latéralement par le bord externe de l'anneau, du disque ou de la boucle, de préférence au centre de l'anneau ou du disque ou de la boucle pour limiter les pertes optiques dans le résonateur 124. Lorsque le résonateur 124 est en forme de boucle fermée ou d'anneau, des bras de maintien définis dans la même couche que le résonateur 124 s'étendent chacun depuis le résonateur jusqu'à un plot 122 correspondant. Par exemple, tous les bras de maintien partant du résonateur 124 se rejoignent sur un unique plot 122, de préférence disposé au centre du résonateur 124. A titre d'exemple alternatif, tous les bras de maintien comprennent une première portion partant du résonateur et allant jusqu'au centre du résonateur 124, et une deuxième portion, commune à tous les bras de maintien, allant du centre du résonateur 124 jusqu'à un plot 122 décalé par rapport au centre du résonateur 124.

Le résonateur 124 et la portion 116 du guide d'onde 118 sont couplés optiquement l'un avec l'autre. Par exemple, dans un plan parallèle au substrat 100 et dans une direction orthogonale à la direction longitudinale de la portion 116 du guide d'onde 118, la portion 116 et le résonateur 124 sont couplés optiquement l'un avec l'autre à l'endroit où l'espace entre le guide d'onde 118 et le résonateur 124 est le plus faible. Dans la suite de la description, cet espace où le guide d'onde 118 et le résonateur 124 sont couplés optiquement l'un à l'autre est appelé espace de couplage ou espace optique.

Du fait que le résonateur 124 et la portion 116 du guide d'onde 118 sont fixés au support 104 et font partie de la structure suspendue 102, lorsque le substrat 100 subit des déformations, celles-ci ne modifient pas les dimensions de l'espace de couplage entre le résonateur 124 et le guide d'onde 118.

Le guide d'onde 118, donc la portion 116 du guide d'onde 118, et le résonateur 124 sont formés à partir de, ou définis dans, une même couche 126. Les portions visibles de la couche 126 sont hachurées dans les figures 1 à 4. Du fait que le résonateur 124 et le guide d'onde 118 soient définis dans la même couche 126, le résonateur 124 et la portion 116 du guide d'onde 118 sont alignés dans un plan parallèle au substrat 100.

A titre d'exemple, l'empilement de couches du plot d'ancrage 110 connectant la région 108 de la couche 106 au substrat 100 comprend une portion de la couche 126, bien que cela ne soit pas le cas dans d'autres exemples non illustrés.

A titre d'exemple, l'empilement de couches fixant la région 112 de la couche 106 au substrat 100 comprend une portion de couche 126, bien que cela ne soit pas le cas dans d'autres exemples non illustrés.

La couche 126 est en un matériau adapté à propager la lumière aux longueurs d'onde de fonctionnement du circuit 1. A titre d'exemple, la couche 126 est en silicium, en nitrure de silicium, en arsenic gallium ou en germanium.

Comme le guide d'onde 118, les bras de maintien 120 qui fixent la portion 116 du guide d'onde 118 sont également définis dans la couche 126.

La structure suspendue 102 peut par ailleurs comprendre, de manière optionnelle, un élément mécanique mobile par rapport à la périphérie rigide du support 104. Cet élément, qui est une partie de la structure 102, est configuré pour que ses déplacements par rapport au support 104 modifient les propriétés optiques, par exemple l'indice optique effectif, de la portion 116 du guide d'onde 118 et/ou du résonateur 124. Dans l'exemple de mode de réalisation des figures 1 à 4, la structure 102 comprend un tel élément mécanique mobile.

Plus particulièrement, dans l'exemple des figures 1 à 4, cet élément mécanique mobile, c'est à dire la partie mobile de la structure 102, est une portion de la couche 126, référencée 128 dans ces figures. Un espace vide sépare le support 104 de tout ou partie de la partie mobile 128.

Dans une direction parallèle au substrat 100, la partie mobile 128 de la structure 102 est séparée du résonateur 124 par un espace, dit espace mécanique. L'espace mécanique, ou, dit autrement, la partie mobile 128 et le résonateur 124, sont configurés pour qu'un déplacement de la partie mobile 128 dans la direction parallèle au substrat 100, de préférence la direction dans laquelle l'espace mécanique est le plus faible, entraîne une variation correspondante de l'espace mécanique, et donc de l'indice optique effectif du résonateur 124.

De préférence, la direction dans laquelle l'espace mécanique est le plus petit, et la direction dans laquelle l'espace de couplage entre la portion 116 du guide d'onde 118 et le résonateur est le plus petit sont confondues et correspondent, de préférence, à une direction de déformation des liaisons souples 114 lorsque celles-ci sont présentes.

La partie mobile 128 de la structure 102 est fixée au support 104, par une liaison mécanique autorisant le déplacement de cette partie mobile 128 par rapport au support 104, et, plus particulièrement, par rapport à la périphérie rigide du support 104. De préférence, la liaison mécanique de la partie mobile 128 au support 104 est configurée pour autoriser le déplacement de la partie 128 dans la même direction parallèle au substrat que celle pour laquelle l'espace optique et/ou l'espace mécanique sont les plus faibles.

Dans l'exemple des figures 1 à 4, la partie mobile 128 est fixée au support 104 par des bras de maintien 120 ayant chacun une extrémité connectée à, et en contact avec, la partie mobile 128, et une autre extrémité fixée au support 104. Par exemple, dans chaque bras de maintien 120, l'extrémité du bras 120 fixée au support 104 est connectée à, et en contact avec, un plot d'ancrage 122 connecté entre le support 104 et le bras 120. Les bras de maintien 120 qui relient la partie mobile 128 au support 104 sont configurés pour être moins rigides que la partie mobile 128 dans la direction de déplacement de la partie mobile 128 par rapport au support 104. Dans ce mode de réalisation, comme la partie mobile 128, les bras de maintien 120 qui fixent la partie mobile 128 au support 104 sont définis dans la couche 126.

Dans un autre exemple non illustré, à la place des bras de maintien 120, la partie mobile 128 comprend une région, de préférence disposée du côté opposé à l'espace mécanique, reliée au support 104 par un plot d'ancrage 122 s'étendant entre cette région et le support et recouvrant, par exemple, sensiblement toute cette région. Dit autrement, dans ce cas, la partie mobile 128 forme une lame déformable ayant une extrémité libre disposée du côté de l'espace mécanique et une extrémité fixée au support 104.

Bien que cela ne soit pas visible dans les figures 1 à 4, chaque liaison 114 (souple, semi-rigide ou rigide) peut comprendre une portion de la couche 126.

A titre d'exemple, lors de la fabrication du dispositif 1, la couche 126 repose initialement sur une couche 130, reposant elle-même sur le substrat 100. Puis différents éléments, dont le résonateur 124 et le guide d'onde 118, sont définis par gravure dans la couche 126. A cette étape de gravure de la couche 126, une portion de la couche 126 peut être laissée en place dans chaque empilement de couches reliant mécaniquement le substrat 100 à la deuxième partie de la couche 106, c'est-à-dire la région 108 et la région 112 de la couche 106 dans cet exemple. Ensuite, au moins une couche 132 est formée sur l'ensemble puis la couche 106 est formée, par dépôt ou par report, sur la couche 132. Chaque plot d'ancrage 122 peut être en le même matériau que la couche 106 en prévoyant, à l'emplacement de chaque plot 122, une ouverture dans la couche 132 jusqu'à la couche 126 qui sera remplie par le matériau de la couche 106 lors de son dépôt, ou encore en un autre matériau en remplissant l'ouverture dans la couche 132 avec ce matériau avant de former la couche 106. Les couches 130 et 132 sont en des matériaux gravables sélectivement par rapport aux matériaux de couches 126 et 106 et du substrat 100. Des portions de la couche 106 sont ensuite retirées par gravure, par exemple pour y définir le support 104, les liaisons 114 et, plus généralement, les portions ou parties ou régions de la couche 106 décrites dans la présente demande. Ensuite, des portions des couches 130 et 132 sont retirées par gravure sacrificielle sélective par rapport aux couches 126 et 106 et au substrat 100 pour obtenir le circuit 1. A titre d'exemple, la ou les gravures des couches 130 et 132 sont sélectives par rapport au matériau des plots 122. A titre d'autre exemple, chaque plot 122 est en le même matériau que celui de la couche 106 et la personne du métier sera alors en mesure de prévoir des ouvertures dans la couche 106 et/ou dans la couche 126 de sorte qu'en contrôlant le temps de gravure sélective de la couche 132, le plot 122 soit laissé en place à la fin de la gravure.

Dans l'exemple de procédé de fabrication ci-dessus, lorsque la couche 126 est une couche semiconductrice, par exemple en silicium, et que la couche 130 est une couche isolante, par exemple en oxyde de silicium, la couche 126 peut correspondre à la couche semiconductrice d'une structure de type semiconducteur sur isolant (SOI de l'anglais "Semiconductor On Insulator") formée sur le substrat 100.

Toujours dans l'exemple de procédé de fabrication ci-dessus, dans le dispositif 1, chaque empilement de couches reliant mécaniquement le substrat 100 à la deuxième partie de la couche 106, c'est à dire la région 108 et la région 112 de la couche 106 dans cet exemple, peut comprendre des portions laissées en place de la couche 130 et peut ou non comprendre une portion laissée en place de la couche 132. En effet, il est possible que chacun de ces empilements ne comprenne pas de portion laissée en place de la couche 132 en prévoyant que, après la formation de la couche 132 sur la couche 126, une ouverture soit gravée dans la couche 132 jusqu'à la couche 126 à l'emplacement de l'empilement. Ainsi, lorsque la couche 106 est ensuite formée par dépôt sur la couche 132, à l'emplacement de l'empilement, le matériau de la couche 106 vient directement au contact de la couche 126 du fait de l'ouverture traversante dans la couche 132. La couche 132 peut ensuite être planarisée.

Dans un autre exemple, la couche 106 correspond à une portion d'un premier substrat, par exemple semiconducteur, par exemple en silicium, la couche 132 reposant alors sur ce premier substrat et la couche 126 reposant alors sur la couche 132. De la même manière que précédemment, des éléments, dont le résonateur 124 et le guide d'onde 118, sont formés dans la couche 126. Un matériau de remplissage, par exemple identique au matériau de la couche 130, est déposé puis planarisé en s'arrêtant avant ou sur la couche 126. Le substrat 100 revêtu de la couche 130 est ensuite reporté sur la structure avant d'amincir le premier substrat de manière à n'en laisser que la couche 106. Puis, la couche 106 est gravée pour y définir les différentes parties ou portions ou régions de la couche 106, dont le support 104, puis des portions des couches 130 et 132 sont retirées par des étapes de gravures similaires à celles qui ont été décrites pour l'autre exemple ci-dessus.

Dans cet autre exemple de procédé de fabrication, lors du report du substrat 100 sur la structure comprenant le premier substrat, la couche 130 peut déjà faire partie de la structure et reposer alors sur la couche 126 plutôt que de revêtir le substrat 100, et le substrat 100 est alors mis en contact avec la couche 130 lors de l'étape de report.

Dans cet autre exemple de procédé de fabrication, lorsque la couche 126 est une couche semiconductrice, par exemple en silicium, et que la couche 132 est une couche isolante, par exemple en oxyde de silicium, la couche 126 peut correspondre à la couche semiconductrice d'une structure de type semiconducteur sur isolant (SOI de l'anglais "Semiconductor On Insulator") formée sur le premier substrat.

On a indiqué ci-dessus deux exemples de fabrication de la structure 102, et, plus généralement, du dispositif 1. Toutefois, comme cela a déjà été indiqué précédemment, la personne du métier est en mesure de fabriquer le dispositif 1 avec des étapes usuelles des procédés de fabrication des circuits intégrés. Dit autrement, les étapes permettant d'obtenir le dispositif 1 ne se limitent pas aux exemples décrits ci-dessus. Par exemple, pour la gravure sélective de la couche 130, une ouverture peut être gravée, sous le support 104, à travers tout le substrat 100 de sorte que l'ouverture débouche sur la portion de la couche 130 qui est ensuite retirée par gravure sélective par rapport à la couche 126.

De préférence, le dispositif 1 ne comprend qu'une seule couche 130 et une seule couche 132. Toutefois, la couche 130 peut correspondre à une pluralité de couches empilées les unes sur les autres et/ou la couche 132 peut correspondre à une pluralité de couches empilées les unes sur les autres.

Au sein de la structure 102, des portions de la couche 126, à savoir la portion 116 du guide d'onde 118, le résonateur 124 et, dans l'exemple des figures 1 à 4, la partie mobile 128, sont séparées du support 104 par des espaces vides. Pour obtenir ces espaces vides, comme cela été décrit ci-dessus à titre d'exemple, au moins certaines portions de la première partie de la couche 106, c'est à dire au moins certaines parties du support 104, peuvent initialement reposer sur une couche sacrificielle 132, qui est ensuite retirée, au moins aux emplacements de ces espaces vides, par gravure sélective de la couche 132 par rapport aux couches 106 et 126. A titre d'exemple, avant l'étape de gravure sélective de la couche 132, celle-ci peut s'étendre sur toute la surface de la couche 126 ou n'être présente qu'à certains emplacements. A titre d'exemple, avant l'étape de gravure sélective de la couche 132, la couche 132 peut avoir une épaisseur constante, ou peut présenter des régions moins épaisses que d'autres.

Bien que dans l'exemple des figures 1 à 4 le dispositif 1 comprenne une partie mobile 128, dans d'autres exemples cette partie mobile 128 peut être omise. C'est par exemple le cas :
- lorsque l'on cherche à détecter des déplacements de la portion 116 du guide d'onde 118 par rapport au résonateur 124 entraînant une modification correspondante de l'espace de couplage entre le guide d'onde 118 et le résonateur ; ou
- lorsque l'on cherche à détecter des variations d'un paramètre modifiant la longueur d'onde de résonance du résonateur 124, par exemple des variations de l'indice optique du milieu entourant le résonateur 124 ou des variations de température ; ou
- lorsque le résonateur 124 possède des modes de déformation mécaniques dotés d'un couplage opto-mécanique avec le ou les modes optiques du résonateur 124 et que l'on cherche à mesurer ces déformations du résonateur 124.

A titre d'exemple, les deux couches sacrificielles 130 et 132 sont en un même matériau, gravable sélectivement par rapport au(x) matériau(x) des couches 126 et 106, du substrat 100, et, par exemple de chaque plot 122. Toutefois, dans d'autres exemples, les couches 130 et 132 peuvent être en des matériaux différents, chacun gravable sélectivement par rapport au(x) matériau(x) des couches 126 et 106, du substrat 100 et, par exemple, de chaque plot 122.

A titre d'exemple, le substrat 100 est en silicium ou en arsenic-gallium.

A titre d'exemple, la couche 130 est une couche d'oxyde de silicium ou un polymère photonique tel que par exemple le BCB benzocyclobutene.

A titre d'exemple, la couche 132 est une couche d'oxyde de silicium ou un polymère photonique tel que par exemple le BCB benzocyclobutene.

A titre d'exemple, chaque plot 122 est en silicium, en nitrure de silicium ou en oxyde de silicium.

A titre d'exemple, l'épaisseur de la couche 126 est comprise entre 40 et 1000 nm, par exemple entre 50 et 500 nm.

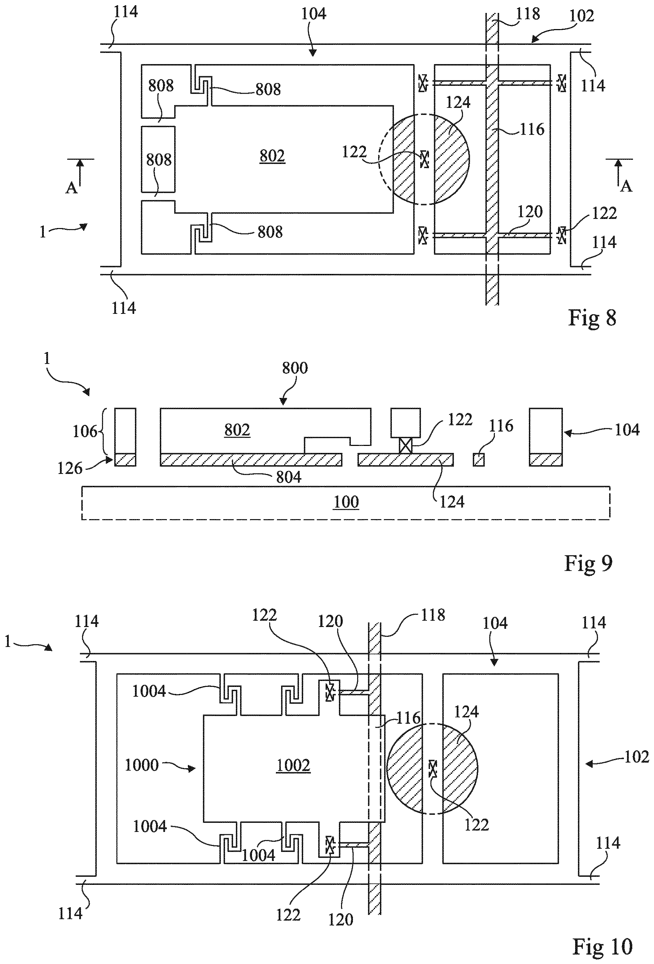

A titre d'exemple, la couche 132 a une épaisseur supérieure à 500 nm, par exemple au-dessus des portions de la couche 126 ayant des propriétés optiques ne devant pas être modifiée par la proximité du support 104 ou de la couche 106. Toutefois, la couche 132 peut avoir une épaisseur minimale comprise entre 20 et 500 nm au-dessus de portions de la couche 126 ayant des propriétés optiques que l'on souhaite voir dépendre de l'espace entre le support 104 et ces portions de la couche 126, comme cela sera par exemple illustré en relation avec les figures 8 et 9.

A titre d'exemple, l'épaisseur de la couche 130 est supérieure à 500 nm de sorte que le substrat 100 soit suffisamment éloigné du résonateur 124 pour ne pas en modifier les propriétés optiques.

A titre d'exemple, la couche 106 a une épaisseur comprise entre 100 nm et plusieurs centaines de micromètres, par exemple une épaisseur supérieure à 1 um.

A titre d'exemple, la couche 126 a une épaisseur comprise entre 40 nm et 1 um, de préférence comprise entre 50 et 500 nm.

On a décrit ci-dessus, en relation avec les figures 1 à 4, un exemple de mode de réalisation du dispositif 1. Des exemples de variantes de réalisation du dispositif 1 vont maintenant être décrites. Dans ces variantes de réalisation, sauf indications contraires, tout ce qui a été décrit en relation avec l'exemple de mode de réalisation décrit en relation avec les figures 1 à 4 s'applique.

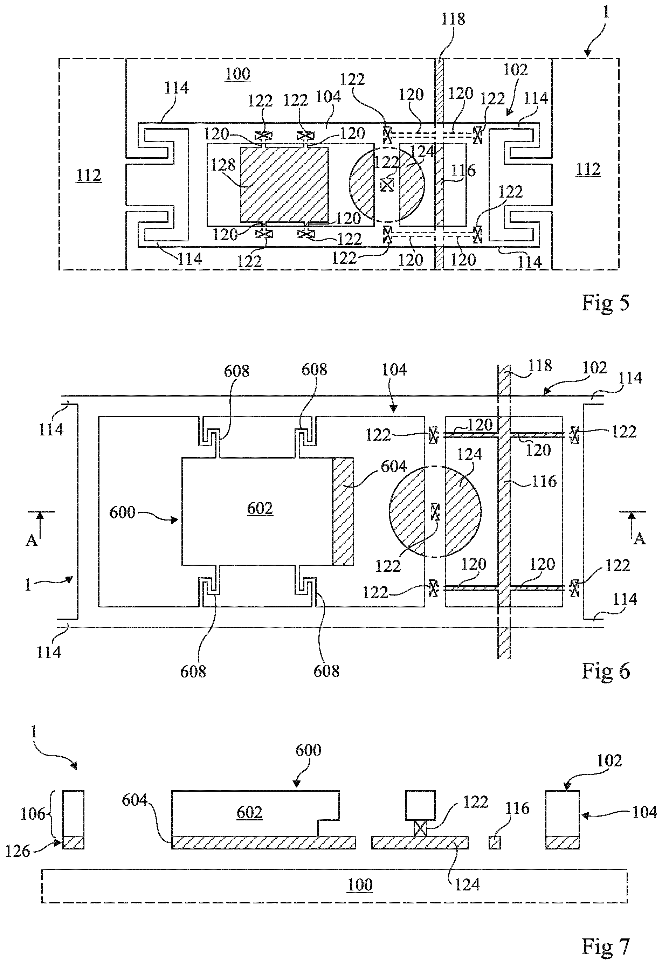

La figure 5 représente, par une vue de dessus schématique, un exemple d'une variante de réalisation du circuit photonique 1 décrit en relation avec les figures 1 à 4.

Dans cette variante de réalisation, le circuit 1 diffère de celui du mode de réalisation décrit en relation avec les figures 1 à 4 par son support 104.

En effet, dans le mode de réalisation décrit en relation avec les figures 1 à 4, le support 104 ne comporte aucune ouverture traversante, c'est à dire aucune ouverture traversant le support 104 de part en part, sur toute son épaisseur.

Dans cette variante de réalisation, le support 104 comprend au moins une ouverture traversante, et, plus particulièrement, deux ouvertures traversantes dans l'exemple de la figure 5.

Cela permet, par exemple, à des particules d'atteindre la partie mobile 128, de sorte à détecter ces impacts de particules sur la partie mobile 128 grâce aux déplacements de la partie mobile 128 résultant de ces impacts. La personne du métier sera en mesure de dimensionner l'ouverture dans le support 104 pour que des particules atteignent la partie mobile 128, même lorsque ces particules arrivent sur le dispositif avec un angle non nul par rapport à une direction orthogonale au substrat 100.

La prévision d'une ou de plusieurs ouvertures traversantes peut également permettre d'adapter la masse du support 104, et donc de la structure 102, de sorte à obtenir une fréquence de coupure donnée dans la transmission de perturbations mécaniques (déformation du substrat et/ou vibration) vers le support 104.

Toutefois, bien que le support 104 comprenne des ouvertures traversantes, le support 104 conserve une région périphérique pleine, par exemple ici de forme rectangulaire ou en forme de U dans d'autres exemples non illustrés. Cette partie périphérique est rigide par rapport aux éléments souples du dispositif 1 comme par exemple les liaisons souples 114 ou les bras de maintien 120.

Dans l'exemple de la figure 5, la structure 102 est reliée au substrat 100 par l'intermédiaire des liaisons souples 114, mais le dispositif 1 est dépourvu de plot d'ancrage 110 ou d'une liaison rigide ou semi-rigide 114. Dans d'autres exemples non illustrés, le dispositif 1 comprend les liaisons 114 qui sont toutes souples et le plot d'ancrage 110. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

La figure 6 représente, par une vue de dessus schématique, un exemple d'une autre variante de réalisation du circuit 1, la figure 7 étant une vue en coupe schématique prise dans le plan de coupe AA de la figure 6. En figure 6, pour ne pas surcharger la figure, seules la structure 102 et une partie des liaisons 114 sont représentées. Bien que dans l'exemple des figures 6 et 7 le dispositif 1 soit dépourvu de plot d'ancrage 110 et ne comprenne que des liaisons souples 114, les autres configurations (plot 110 plus liaisons souples 114, ou plot 110 uniquement, ou uniquement une liaison 114 rigide ou semi-rigide, ou uniquement des liaisons 114 souples sauf une qui est rigide ou semi-rigide) permettant de coupler la structure 102 au substrat 100 s'appliquent également au dispositif 1 des figures 6 et 7.

Dans cette variante de réalisation, le circuit 1 diffère de celui du mode de réalisation décrit en relation avec les figures 1 à 4 et de celui de la variante de réalisation décrite en relation avec la figure 5 par la mise en oeuvre de la partie mobile de la structure 102.

En effet, dans les exemples de modes de réalisation et de variantes de réalisation décrits précédemment, la partie mobile de la structure 102 configurée pour former l'espace mécanique avec le résonateur 124 comprend uniquement une portion de la couche 126. Dans cette variante de réalisation, la partie mobile de la structure 102, référencée 600 en figures 6 et 7, comprend non seulement une portion 604 de la couche 126, mais aussi une partie 602 du support 104, ou, dit autrement, une partie 602 de la couche 106, la partie 602 du support 104 étant mobile par rapport à la périphérie rigide du support 104. Dit autrement, la partie mobile 600 de la structure 102 comprend ici un empilement de couches comprenant la portion 604 de la couche 126 et la partie 602 du support 104.

Par rapport au cas où la masse mobile ne comprend qu'une portion de couche 126, le cas où la masse mobile comprend une portion de couche 106 permet, pour un encombrement comparable dans un plan parallèle au substrat 100, d'avoir une masse mobile plus lourde et mieux adaptée à un capteur inertiel alors qu'une masse mobile plus légère ne comprenant qu'une portion de la couche 126 est mieux adaptée à un capteur gravimétrique.

La portion 604 de la couche 126 est fixée à la partie mobile 602 du support 104 de sorte que, quand la partie mobile 602 du support 104 se déplace par rapport à la partie périphérique rigide du support 104, la portion 604 de la couche 126 se déplace avec elle.

Dans l'exemple des figures 6 et 7, la portion 604 de la couche 126 est connectée à la partie mobile 602 du support 104. Toutefois, dans d'autres exemples non illustrés, une portion de la couche sacrificielle 132 peut être laissée en place entre la portion 602 et la partie 604.

Dans une direction parallèle au substrat 100, la partie mobile 600 de la structure 102, et, plus particulièrement, la portion 604 de la couche 126, est séparée du résonateur 124 par l'espace mécanique. L'espace mécanique, ou, dit autrement, la partie mobile 600 et le résonateur 124, sont configurés pour qu'un déplacement de la partie mobile 600 dans une direction parallèle au substrat 100, de préférence dans la direction dans laquelle l'espace mécanique est le plus faible, entraîne une variation correspondante de l'espace mécanique, et donc de l'indice optique effectif du résonateur 124.

Pour que la partie 602 du support 104 soit mobile par rapport à la périphérie rigide du support 104, la partie 602 est couplée à la périphérie du support par des liaisons souples (ou déformables) 608. De préférence, les liaisons 608 sont déformables dans la direction de déplacement de la partie mobile 600 de la structure 102.

A titre d'exemple, chaque liaison 608 est mise en oeuvre par une portion du support 104, s'étendant entre la partie mobile 602 du support 104 et la périphérie du support 104. Par exemple, chaque liaison 608 a la forme d'une poutre, ou d'une pluralité de poutres mises bout à bout pour former au moins un méandre. Chaque poutre a, dans un plan parallèle au substrat 100, une dimension transversale par exemple configurée pour permettre le déplacement de la partie 602 du support 104 par rapport à la périphérie du support 104.

A titre d'exemple, chaque liaison 608 peut comprendre, en plus d'une portion du support 104, une portion de la couche 126, voire également une portion de la couche 132.

Du fait que la partie mobile 600 de la structure 102 comprend une partie 602 du support 104, cela permet d'augmenter sa masse par rapport à un cas où elle ne comprend qu'une portion de la couche 126 comme cela a été décrit en relation avec les figures 1 à 5. Cela est par exemple avantageux lorsque le dispositif 1 est utilisé comme capteur inertiel.

A titre d'exemple, la portion 604 de la couche 126 et la partie 602 du support 104 (donc de la couche 106) peuvent avoir, dans une direction orthogonale au substrat 100, des bords alignés. Toutefois, dans d'autres exemples, comme c'est par exemple le cas en figures 6 et 7, la portion 604 de la couche 126 peut s'étendre au-delà de la partie 602 du support 104, par exemple du côté du résonateur 124.

Dans l'exemple des figures 6 et 7, la structure 102 est reliée au substrat 100 par l'intermédiaire des liaisons souples 114, mais le dispositif 1 est dépourvu de plot d'ancrage 110 ou d'une liaison rigide ou semi-rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

La figure 8 représente, par une vue de dessus schématique, un exemple d'une autre variante de réalisation du circuit 1, la figure 9 étant une vue en coupe schématique prise dans le plan de coupe AA de la figure 8. En figure 8, pour ne pas surcharger la figure, seule la structure 102 et une partie des liaisons 114 sont représentées.

Dans cette variante de réalisation, le circuit 1 diffère de ceux des modes de réalisation et des variantes de réalisation décrits en relation avec les figures 1 à 7 par la mise en oeuvre de la partie mobile de la structure 102, cette partie mobile étant référencée 800 en figures 8 et 9.

Plus particulièrement, alors que dans les modes de réalisation et variantes de réalisation décrits en relation avec les figures 1 à 7, l'espace mécanique appartient à un plan parallèle au substrat 100, dans cette variante, l'espace mécanique entre la partie mobile 800 de la structure 102 et le résonateur 124 est défini dans une direction orthogonale au substrat 100. Dit autrement, dans la variante décrite en relation avec les figures 8 et 9, la partie mobile 800 de la structure 102 recouvre une partie du résonateur 124.

La partie mobile 800 de la structure 102 comprend une partie 802 du support 104, mobile par rapport à la périphérie rigide du support 104, et peut comprendre une portion 804 de la couche 126. Dans l'exemple illustré en figures 8 et 9, la partie mobile 800 de la structure 102 comprend un empilement de couches comprenant la partie 802 du support 104 et la portion 804 de la couche 126. Par exemple, la portion 804 de la couche 126 est fixée à la partie mobile 802 du support 104.

Dans une direction orthogonale au substrat 100, la partie mobile 800 de la structure 102, et, plus particulièrement, une région de la partie 802 du support 104 qui recouvre une région correspondante du résonnateur 124, est séparée du résonateur 124 par l'espace mécanique. L'espace mécanique, ou, dit autrement, la partie mobile 800 et le résonateur 124, sont configurés pour qu'un déplacement de la partie mobile 800 dans une direction orthogonale au substrat 100 entraîne une variation correspondante de l'espace mécanique, et donc de l'indice optique effectif du résonateur 124.

Pour que la partie 802 du support 104 soit mobile dans une direction orthogonale au substrat 100, et, plus particulièrement, pour que la région de la partie 802 disposée en regard du résonateur 124 soit mobile orthogonalement au substrat 100, la partie 802 est couplée à la périphérie du support par des liaisons souples (ou déformables) 808. De préférence, les liaisons 808 sont déformables dans la direction de déplacement de la partie mobile 800 de la structure 102.

A titre d'exemple, chaque liaison 808 est mise en oeuvre par, ou comprend, une portion du support 104, s'étendant entre la partie mobile 802 du support 104 et la périphérie rigide du support 104. Par exemple, chaque liaison 808 a la forme d'une poutre, ou d'une pluralité de poutres mises bout à bout pour former au moins un méandre. Chaque poutre a, dans un plan parallèle au substrat 100, une dimension transversale par exemple configurée pour permettre le déplacement de la partie 802 du support 104 par rapport à la périphérie du support 104. A titre d'exemple, dans un plan parallèle au substrat 100, la connexion des liaisons 808 à la partie mobile 802 du support 104 est plus proche d'un bord de la partie 802 qui est du côté opposé à l'espace mécanique que du bord de la partie 802 qui est au moins en partie disposé au-dessus du résonateur 124.

A titre d'exemple, chaque liaison 808 peut comprendre, en plus d'une portion du support 104, une portion de la couche 126, voire également une portion de la couche 132.

Dans l'exemple des figures 8 et 9, la structure 102 est reliée au substrat 100 par l'intermédiaire des liaisons souples 114, mais le dispositif 1 est dépourvu de plot d'ancrage 110 ou d'une liaison rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

La figure 10 représente, par une vue de dessus schématique, un exemple d'une autre variante de réalisation du circuit 1. En figure 10, pour ne pas surcharger la figure, seule la structure 102 et une partie des liaisons 114 sont représentées.

Dans les modes de réalisation et variantes de réalisation décrits en relation avec les figures 6 à 9, la portion 116 du guide d'onde 118 et le résonateur 124 sont fixés à des parties du support 104 autres que la partie mobile 602 ou 802 du support 104 de sorte que les positions relatives de la portion 116 et du résonateur 124 l'un par rapport à l'autre soient fixes, et, en outre, l'espace optique est distinct de l'espace mécanique.

Dans la variante de réalisation illustrée par la figure 10, l'espace optique et l'espace mécanique sont confondus. Pour cela, comme en figures 6 à 9, la structure 102 comprend une partie mobile 1000 par rapport à la périphérie du support 104, cette partie mobile 1000 correspondant à une partie 1002 du support 104. En outre, dans cette variante, la portion 116 du guide d'onde 118 est fixé à la partie mobile 1002 du support 104 alors que le résonateur 124 est fixé à une autre partie du support 104, par exemple à une partie du support 104 qui n'est pas mobile par rapport à la périphérie du support 104. Ainsi, lorsque la partie mobile 1000, 1002 se déplace, par exemple dans un plan parallèle au substrat et, de préférence, dans une direction dans laquelle l'espace optique et l'espace mécanique sont mesurés, cela entraîne un déplacement correspondant de la portion 116 du guide d'onde 118 par rapport au résonateur 124, donc une modification correspondante du couplage optique entre le guide d'onde 118 et le résonateur 124.

La partie mobile 1002 du support 104 est reliée à la partie périphérique du support 104 par des liaisons souples 1004 comprenant chacune une portion du support 104. Ces liaisons souples 1004 sont mises en oeuvre de manière similaire aux liaisons souples 608 et 808 décrites précédemment, de manière à permettre le déplacement de la partie 1002 du support 104 par rapport à sa périphérie dans une direction parallèle au substrat 100, de préférence dans la direction dans laquelle est déterminé l'espace mécanique et optique.

La portion 116 du guide d'onde 118 est fixée à la partie 1002 mobile du support 104, par exemple par des bras de maintien 120 ayant chacun une extrémité connectée à la portion 116 et une autre extrémité connectée à un plot 122 fixant le bras 120 à la partie 1002 du support 104. De préférence, les bras de maintien sont configurés pour être rigide dans la direction de déplacement de la partie 1002 par rapport à la périphérie du support 104.

Dans l'exemple représenté, la partie 1002 du support recouvre une partie de la portion 116 du guide d'onde 118 et une partie de l'espace mécanique et optique. Toutefois, dans d'autres exemples non illustrés, cela peut ne pas être le cas.

Dans l'exemple des figures 9 et 10, la structure 102 est reliée au substrat 100 par l'intermédiaire des liaisons souples 114, mais le dispositif 1 est dépourvu de plot d'ancrage 110 ou d'une liaison rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

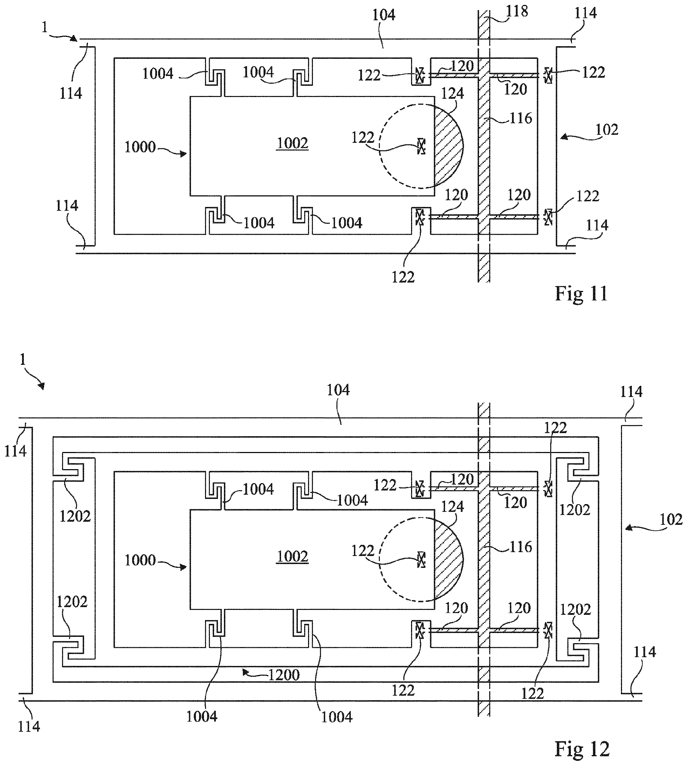

La figure 11 représente, par une vue de dessus schématique, un exemple d'une autre variante de réalisation du circuit 1. En figure 11, pour ne pas surcharger la figure, seule la structure 102 et une partie des liaisons 114 sont représentées.

La variante de réalisation illustrée par la figure 11 diffère de celle illustrée par la figure 10 par le fait qu'en figure 11 c'est le résonateur 124 qui est fixé à la partie mobile 1002 du support 104 et la portion 116 du guide d'onde 118 qui est fixé à une autre partie du support 104, par exemple à une partie du support 104 qui n'est pas mobile par rapport à la périphérie du support 104.

En effet, dans la variante de réalisation de la figure 10, la portion 116 du guide d'onde 118 est fixée à la partie mobile 1000 de la structure 102, plus particulièrement à la partie mobile 1002 du support 104, et le résonateur 124 est fixé à une partie du support 104 autre que sa partie mobile 1004, de sorte que le déplacement de la partie mobile 1002 par rapport à cette autre partie du support 104 entraîne une modification correspondante de l'espace optique et mécanique. De manière symétrique, dans la variante de réalisation de la figure 11, le résonateur 124 est fixé à la partie mobile 1000 de la structure 102, plus particulièrement à la partie mobile 1002 du support 104, et la portion 116 du guide d'onde 118 est fixée à une partie du support 104 autre que sa partie mobile 1004, de sorte que le déplacement de la partie mobile 1002 par rapport à cette autre partie du support 104 entraîne une modification correspondante de l'espace optique et mécanique.

Dans l'exemple de la figure 11, la structure 102 est reliée au substrat 100 par l'intermédiaire des liaisons souples 114, mais le dispositif 1 est dépourvu de plot d'ancrage 110 ou d'une liaison rigide ou semi-rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

Dans les variantes de réalisation des figures 10 et 11, le support 104 comprend une partie 1002 qui est mobile par rapport à la périphérie rigide du support 104 et reliée à celle-ci par des liaisons souples 1004. En outre, parmi la portion 116 du guide d'onde 118 et le résonnateur 124, l'un est fixé à la partie 1002 du support 104, alors que l'autre est fixé à une partie du support 104 fixe par rapport à la périphérie du support 104, de sorte à définir un espace optique et mécanique entre la portion 116 et le résonateur 124.

Dans des variantes de réalisation des dispositifs 1 décrits précédemment, le support 104 comprend au moins une partie 1200, dite partie de découplage 1200, par exemple en forme de cadre, qui est reliée, par des liaisons souples ou semi-rigides 1202 similaires aux liaisons souples 114 ou à une liaison 114 semi-rigide, à la partie du support 104 qui est connectée au plot 110 et/ou aux liaisons 114. Au moins le résonateur optique 124 et, de préférence, la partie mobile 1000, 800, 600 lorsqu'il y en a une, sont couplés mécaniquement à la partie du support 104 qui est connectée au plot 110 et/ou aux liaisons 114 par l'intermédiaire d'une liaison mécanique comprenant la ou les parties de découplage 1200 et les liaisons 1202. Lorsqu'il y a plusieurs parties de découplage 1200, ces dernières sont imbriquées les unes dans les autres, par exemple de façon concentrique, et sont couplées mécaniquement deux à deux par des liaisons 1202. Parmi le résonateur optique 124, la portion 116 de guide d'onde 118, et, lorsqu'il y en a une, la partie mobile 1000, 800, 600 ou 128, au moins le résonnateur optique 124 et, de préférence, la partie mobile 1000, 800, 600 lorsqu'il y en a une, sont couplés mécaniquement plus directement à la portion de découplage 1200 la plus éloignée de la partie du support 104 qui est connectée au plot 110 et/ou aux liaisons 114 qu'aux autres parties de découplage 1200.

La prévision d'une ou plusieurs parties de découplage 1200 reliée par des liaisons souples ou semi-rigides 1202 à la partie du support 104 qui est connectée aux liaisons 114 et/ou au plot 110 permet que des perturbations mécaniques transmises du substrat 100 à la partie du support 104 qui est connectée au plot 110 et/ou aux liaisons 114 soient filtrées et ne soient pas transmises au résonateur 124, à la portion 116 du guide d'onde 118 et, lorsqu'il y en a une, à la partie mobile 1000, 800, 600 ou 128.

Par exemple, des liaisons souples 114 et une connexion du plot 110 au support 104 permettent plus particulièrement d'éviter que des déformations lentes ou permanentes du substrat 100 ne soient transmises à la structure 102, et les liaisons souples ou semi-rigides 1202 permettent d'éviter que des vibrations du substrat 100, relativement rapides par rapport à des déformations de ce dernier et qui pourraient être transmises via le plot 110 et/ou les liaisons souples 114 à la partie du support 104 qui est connectée à ces liaisons 114 et/ou ce plot 110, ne soient transmises depuis la partie du support 104 qui est connectée aux liaisons 114 et/ou au plot 110 vers une partie ou plusieurs parties de découplage 1200 auxquelles sont fixés le résonateur 124 et/ou la portion 116 de guide d'onde 118 et/ou une partie mobile 128, 600, 800 ou 1000.

La figure 12 représente une vue de dessus du dispositif 1 selon un exemple d'une telle variante de réalisation. En figure 12, pour ne pas surcharger la figure, seule la structure 102 et une partie des liaisons 114 sont représentées. Dans l'exemple de la figure 12, la structure 102 est reliée au substrat 100 par l'intermédiaire des liaisons souples 114, mais le dispositif 1 est dépourvu de plot d'ancrage 110 ou d'une liaison rigide ou semi-rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

Plus particulièrement, le dispositif 1 de la figure 12 correspond au dispositif 1 de la figure 11 à la différence que le support 104 de la figure 12 comprend au moins une partie de découplage 1200, et plus particulièrement une seule partie de découplage 1200 dans cet exemple. A titre d'exemple, la partie 1200 a la forme d'un cadre, par exemple rectangulaire, bien que cette partie 1200 puisse également avoir une forme de U ou encore d'autres formes.

La partie 1200 est rigide, par exemple au moins aussi rigide que la partie du support 104 qui est connectée aux liaisons 114 et qui aurait été connectée au plot 110 s'il y en avait eu un.

La partie 1200 est fixée à la partie du support 104 qui est connectée aux liaisons 114, dans cet exemple la périphérie du support, par des liaisons souples ou semi-rigides 1202. Ces liaisons souples ou semi-rigides 1202 sont similaire aux liaisons souples 114 ou à une liaison semi-rigide 114 permettant de fixer le support 104 à la région 112 de la couche 106, et donc la structure 102 au substrat 100. Ces liaisons 1202 peuvent également être similaires aux liaisons souples 1004, 808 et 608 décrites précédemment. En particulier, ces liaisons 1202 sont, de préférence, au moins en partie formées dans la première partie de la couche 106, c'est à dire la partie de la couche 106 formant le support 104.

En outre, dans cet exemple, la portion 116 du guide d'onde 118 et la partie mobile 1000 de la structure 102, ou partie 1002 du support 104, sont couplées mécaniquement à la partie du support 104 qui est connectée aux liaisons 114 et au plot 110 s'il y en avait eu un, par une liaison mécanique comprenant la partie 1200 et les liaisons 1202. Par exemple, la partie mobile 1000 de la structure 102, ou partie 1002 du support 104, est fixée au cadre 1200 par des liaisons souples 1004, et la portion 116 du guide d'onde 118 est fixée au cadre 1200 par des bras de maintien 120 ayant chacun une extrémité connectée à la portion 116, et une extrémité fixée au cadre 1200 par l'intermédiaire d'un plot 122. Dans le dispositif 1, comme en figure 11, le résonateur 124 est fixé à la partie mobile 1002 du support 104, par exemple par un plot 122.

Bien que dans l'exemple de la figure 12, le support 104 ne comprenne qu'une seule partie 1200, dans d'autres exemples non illustrés, le support 104 comprend plusieurs parties 1200 imbriquées, la mise en oeuvre de ces autres exemples étant à la portée de la personne du métier à partir de la présente description.

En outre, bien que l'on ait décrit ici le cas d'un dispositif 1 similaire à celui de la figure 11 à la différence que son support 104 comprend au moins une partie de découplage 1200 et des liaisons 1202, la personne du métier est en mesure, à partir de la présente description, de modifier les supports 104 des dispositifs 1 décrits en relation avec les figures 1 à 10 pour y introduire au moins une portion 1200 et des liaisons 1202.

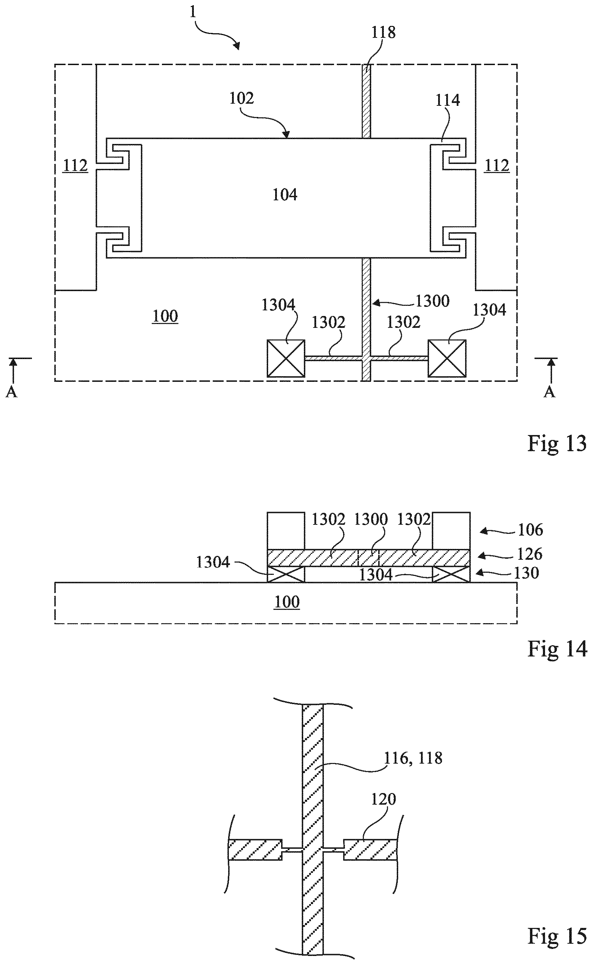

La figure 13 représente, par une vue de dessus schématique, un exemple de mode de réalisation d'une partie du circuit 1 des figures 1 à 12, la figure 14 étant une vue en coupe prise dans le plan AA de la figure 13.

Plus particulièrement, les figures 13 et 14 représentent, dans le dispositif 1 des figures 1 à 4 dépourvu de plot 110, comment le guide d'onde 118, en plus de comprendre une portion 116 (non visible en figure 13) fixée au support 104, comprend en outre une portion 1300 qui est fixée au substrat 100. Dans l'exemple des figures 13 et 14, la structure 102 est reliée au substrat 100 par l'intermédiaire des liaisons souples 114, mais le dispositif 1 est dépourvu de plot d'ancrage 110 ou d'une liaison rigide ou semi-rigide 114. Dans d'autres exemples non illustrés, le dispositif 1 comprend le plot d'ancrage 110 et des liaisons 114 qui sont toutes souples. Dans encore d'autres exemples non illustrés, le dispositif 1 est dépourvu de liaison 114 mais comprend un unique plot d'ancrage 110. Dans encore d'autres exemples non illustrés, le dispositif 1 est dépourvu de plot 110 et comprend soit une unique liaison 114 qui est rigide ou semi-rigide, soit plusieurs liaisons 114 qui sont toutes souples à l'exception d'une qui est rigide ou semi-rigide.

La portion 1300 du guide d'onde 118 ne fait pas partie de la structure suspendue 102, c'est à dire qu'elle n'est pas fixée à la structure 102, ou, dit autrement ici, qu'elle n'est, de préférence, pas disposée sous le support 104 contrairement à la portion 116 du guide d'onde 118.

La portion 1300 du guide d'onde 118 est fixée au substrat 100 par des bras de maintien 1302. De préférence, la portion 1300 fixée au substrat 100 est disposée suffisamment loin de la portion 116 pour que des déformations du substrat 100 transmises à cette portion 1300 ne modifient pas les positions relatives de la portion 116 et du résonateur 124 l'une par rapport à l'autre. Les bras 1302 sont définis dans la couche 126, la limite entre la portion 1300 et les bras 1302 étant indiquée par des pointillés en figure 14. Les bras 1302 sont similaires aux bras 120 à la différence que leurs extrémités qui ne sont pas connectées à la portion 1300 sont fixées au substrat 100. Par exemple, chaque bras 1302 a une extrémité connectée à la portion 1300 et une extrémité fixée au substrat 100 par un plot de fixation 1304. Par exemple chaque plot 1304 a une surface en contact avec le substrat 100 et une surface en contact avec l'extrémité d'un bras 1302. Par exemple, chaque plot 1304 correspond à une portion de la couche 130 laissée en place lors de la gravure sélective de cette dernière.

A titre d'exemple, comme cela est illustré en figure 14, l'extrémité de chaque bras 1302 qui repose sur et en contact avec un plot 1304 correspondant peut être revêtu d'une portion de la couche 106, ou, bien que cela ne soit pas illustré, d'un empilement d'une portion de la couche sacrificielle 132 laissée en place à l'étape de gravure sélective et d'une portion de la couche 106. Dans d'autres exemples, aucune portion de couches 106 et/ou 132 ne recouvre l'extrémité de chaque bras 1302 reposant sur et en contact avec un plot 1304 correspondant.

Dans cet exemple, chaque bras 1302, comme chacun des exemples de bras 120 décrits jusqu'ici, est une poutre définie dans la couche 126, ou, dit autrement, correspond à une portion de la couche 126 ayant la forme d'une poutre. Ainsi, chacun de ces bras 1302 ou 120 est plus rigide dans la direction longitudinale du bras que dans une direction transversale du bras.

Bien que, en figure 13, la portion 1300 soit rectiligne, dans des exemples non illustrés, cette portion 1300 peut comprendre des portions courbées pour amortir ou encaisser les déplacements du substrat 100 par rapport à la structure 102.

La figure 15 représente, par une vue de dessus schématique, un exemple d'une variante de réalisation d'une partie du circuit 1 des figures 1 à 14, et, plus particulièrement, une variante de réalisation d'un bras 120, bien que cette variante puisse s'appliquer aux bras 1302. En figure 15, seule une partie du guide d'onde 118, et plus particulièrement ici une partie de la portion 116 du guide d'onde 118, est représentée, et seule une partie de chaque bras 120, à savoir une partie du bras 120 en contact avec le guide d'onde 118, est représentée.

Par rapport aux exemples précédents de bras 120 où chaque bras 120 correspondait à une poutre de section constante définie dans la couche 126, en figure 15, pour chaque bras 120, l'extrémité qui est en contact avec le guide d'onde 118 a une section transversale plus petite que celle du reste du bras. Cela permet de limiter les pertes optiques dans le guide d'onde 118 qui résultent de la connexion des bras 120 au guide d'onde 118.

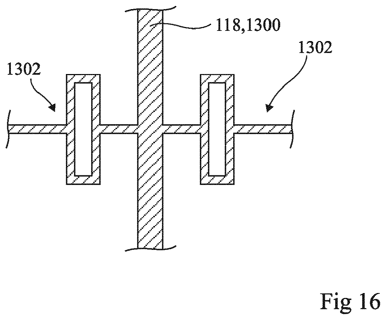

La figure 16 représente, par une vue de dessus schématique, un exemple d'une variante de réalisation d'une partie du circuit 1 des figures 1 à 14, et, plus particulièrement, une variante de réalisation d'un bras 1302. En figure 15, seule une partie du guide d'onde 118, et plus particulièrement ici une partie de la portion 1300 du guide d'onde 118, est représentée, et seule une partie de chaque bras 1302, à savoir une partie du bras 1302 en contact avec le guide d'onde 118, est représentée.

Par rapport aux exemples précédents où chaque bras 1302 correspondait à une poutre de section constante définie dans la couche 126, en figure 15, chaque bras 1302 comprend une poutre définie dans la couche 126, qui est interrompue dans une partie sensiblement centrale par un cadre rectangulaire également défini dans la couche 126. Dit autrement, chaque bras 1302 comprend une première portion de poutre définie dans la couche 126, un cadre rectangulaire défini dans la couche 126, et une deuxième portion de poutre définie dans la couche 126. La première portion de poutre a une extrémité en contact avec le guide d'onde 118 et une autre extrémité en contact avec un premier côté du cadre rectangulaire, la deuxième portion de poutre ayant une extrémité en contact avec un deuxième côté du cadre rectangulaire, par exemple parallèle au premier côté, et une autre extrémité fixée au substrat 100.

La variante de réalisation de la figure 16 est compatible avec celle de la figure 15.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit précédemment des dispositifs 1 dans lesquels la couche 126, et donc les éléments définis dans cette couche comme par exemple le résonateur 124 et la portion 116 de guide d'onde 118, sont disposés entre le support 104 et le substrat 100, dans des variantes de réalisation non illustrées de ces dispositifs, la couche 114, et donc les éléments définis dans cette couche comme par exemple le résonateur 124 et la portion 116 de guide d'onde 118, sont disposés au-dessus du support 104, ce dernier étant alors disposé entre le substrat 100 et la couche 114. La personne du métier sera en mesure, à partir de la description ci-dessus, de mettre en oeuvre ces variantes de réalisations, et, en particulier de fabriquer ces dispositifs 1 en utilisant des étapes usuelles dans la fabrication des circuits intégrés.

Enfin, la mise en oeuvre pratique des modes de réalisation et variantes décrits est à la portée de la personne du métier à partir des indications fonctionnelles données ci-dessus. En particulier, à partir de la description ci-dessus, la personne du métier est en mesure de mettre en oeuvre les liaisons 114 et/ou 608 et/ou 808 et/ou 1004 et/ou 120 et/ou 1302 permettant, lorsque le dispositif 1 est au repos, de maintenir l'espace optique et/ou l'espace mécanique constant et indépendant des déformations du substrat 100. Notamment, la personne du métier est en mesure de mettre en oeuvre :
des liaisons mécaniques rigides, c'est-à-dire des liaisons ayant, par exemple, une raideur supérieure ou égale à celle de la partie du support 104 auquel ces liaisons sont connectées ;
des liaisons mécaniques souples, c'est-à-dire des liaisons ayant, par exemple, une raideur au moins 10 fois plus faible que celle de la partie du support 104 auquel ces liaisons sont connectées ; et
des liaisons mécaniques semi-rigides ou de rigidité intermédiaire, c'est-à-dire des liaisons ayant, par exemple, une raideur supérieure à celle des liaisons souples et inférieure à celle de la partie du support 104 auquel ces liaisons sont connectées.

## Revendications

1. Dispositif photonique (1) comprenant :
un substrat (100) ; et
une structure (102) comprenant un support (104), un résonateur optique (124) fixé au support (104) et une portion (116) d'un guide d'onde (118), la portion (116) du guide d'onde (118) étant couplée optiquement au résonateur optique (124),
dans lequel :
la portion (116) du guide d'onde (118) est fixée au support (104) ;
la structure (102) est suspendue au-dessus du substrat (100) ;
la portion (116) du guide d'onde (118) et le résonateur (124) sont disposés d'un même côté du support (104), par exemple sous le support (104) ;
le support (104) correspond à une première partie d'une première couche (106) ;
une deuxième partie (112, 108) de la première couche (106) est fixée au substrat (100) ; et
le support (104) est couplé mécaniquement à la deuxième partie (112, 108) de la première couche (106).

2. Dispositif selon la revendication 1, dans lequel le couplage mécanique du support (104) à la deuxième partie (112, 108) de la première couche (106) comprend :
- une connexion du support à une première région (108) de la deuxième partie de la première couche (106) ; et/ou
- au moins une troisième partie (114) de la première couche (106) suspendue au-dessus du substrat (100) et étant connectée d'une part à une deuxième région (112) de la deuxième partie de la première couche (106) et d'autre part au support (104).

3. Dispositif selon la revendication 2, dans lequel le couplage mécanique du support (104) à la deuxième partie (112, 108) de la première couche (106) :
- comprend la connexion du support à la première région (108) de la deuxième partie de la première couche (106) et est dépourvu de troisième partie (114) de la première couche (106), ladite connexion mettant en oeuvre une liaison rigide entre le support (104) et la deuxième partie (108) de la première couche (106) ; ou
- comprend ladite au moins une troisième partie (114) de la première couche (106) et est dépourvu de connexion entre le support (104) et la deuxième partie de la première couche (106), ladite au moins une troisième partie (114) de la première couche (106) comprenant :
* plusieurs troisièmes parties (114) mettant chacune en oeuvre une liaison souple entre le support (104) et la deuxième partie (112) de la première couche (106), ou
* plusieurs troisièmes parties (114), une seule desdites troisièmes parties mettant en oeuvre une liaison rigide ou semi-rigide entre le support (104) et la deuxième partie (112) de la première couche (106), et les autres troisièmes parties (114) mettant chacune en oeuvre une liaison souple entre le support (104) et la deuxième partie (112) de la première couche (106), ou
* une seule troisième partie (114) mettant en oeuvre une liaison rigide ou semi-rigide entre le support (104) et la deuxième partie (112) de la première couche (106) ; ou
- comprend la connexion du support à la première région (108) de la deuxième partie de la première couche (106) et ladite au moins une troisième partie (114) de la première couche (106), ladite connexion mettant en oeuvre une liaison rigide entre le support (104) et la première région (108) de la deuxième partie de la première couche (106), et chaque troisième partie (114) de la première couche (106) mettant en œuvre une liaison souple entre le support (104) et la deuxième région (112) de la deuxième partie de la première couche (106).

4. Dispositif selon l'une quelconque des revendications 1 à 3, dans lequel le guide d'onde (118) et le résonateur (124) sont définis dans une même troisième couche (126).

5. Dispositif selon la revendication 4, dans lequel la portion (116) du guide d'onde (118) est fixée au support (104) par des bras (120) définis dans la troisième couche (126), chacun desdits bras (120) ayant une extrémité en contact avec la portion (116) du guide d'onde (118) et une extrémité fixée au support (104).

6. Dispositif selon la revendication 4 ou 5, dans lequel :
le guide d'onde (118) comprend une autre portion (1300) ne faisant pas partie de la structure (102) et étant, de préférence, disposée au-delà de la structure (102) ; et
des bras (1302) définis dans la troisième couche (126) comprennent chacun une extrémité en contact avec cette autre portion (1300) du guide d'onde (118) disposée au-delà de la structure (102) et une extrémité fixée au substrat (100) .

7. Dispositif selon l'une quelconque des revendications 1 à 6, dans lequel :
le support (104) comprend au moins une partie de découplage (1200) ;
le support (104) comprend des liaisons souples ou semi-rigides (1202) reliant ladite au moins une partie de découplage (1200) à une partie du support (104) qui est couplée mécaniquement à la deuxième partie (112, 108) de la première couche (106) ; et
au moins le résonateur (124) est couplée mécaniquement plus directement à ladite au moins une partie de découplage qu'à la partie du support (104) qui est couplée mécaniquement à la deuxième partie (112, 108) de la première couche (106).

8. Dispositif selon la revendication 7, dans lequel la structure (102) comprend une partie mobile (128 ; 600 ; 800 ; 1000), ladite partie mobile étant couplée mécaniquement plus directement à ladite au moins une partie de découplage (1200) qu'à la partie du support (104) qui est couplée mécaniquement à la deuxième partie de la première couche.

9. Dispositif selon l'une quelconque des revendications 1 à 6, dans lequel la structure (102) comprend une partie mobile (128 ; 600 ; 800 ; 1000) par rapport à une partie du support (104) qui est couplée mécaniquement à la deuxième partie (112, 108) de la première couche (106).

10. Dispositif selon la revendication 8 ou 9, dans lequel :
la partie mobile (1000) de la structure (102) est une partie mobile (1002) du support (104) ;
parmi le résonateur (124) et la portion (116) du guide d'onde (118) faisant partie de la structure (102), l'un est fixé à la partie mobile (1002) du support (104) et l'autre est fixé à une autre partie du support (104) ; et
la structure (102) est configurée pour qu'un déplacement de la partie mobile (1000) de la structure (102) dans une direction parallèle au substrat (100) entraîne une modification correspondante du couplage optique entre ladite portion (116) de guide d'onde (118) et le résonateur (124) .

11. Dispositif selon la revendication 8 ou 9, dans lequel :
la partie mobile (800) de la structure (102) comprend une partie mobile (802) du support (104) ;
la portion (116) du guide d'onde (118) faisant partie de la structure (102) et le résonateur (124) sont fixés à une autre partie du support (104) que la partie mobile (802) du support (104) ;
la partie mobile (802) du support comprend une région disposée en vis-à-vis d'une partie du résonateur (124) dans une direction orthogonale au substrat (100) ; et
la structure (102) est configurée pour qu'un déplacement de la partie mobile (800) de la structure dans la direction orthogonale au substrat (100) entraine une variation correspondante d'indice effectif du résonateur (124).

12. Dispositif selon la revendication 8 ou 9 prise dans sa dépendance à l'une quelconque des revendications 4 à 6, dans lequel :
la partie mobile (600) de la structure (102) comprend un empilement comprenant une portion (604) de la troisième couche (126) et une partie mobile (602) du support (104) ; et
dans une direction parallèle au substrat (100), ladite portion (604) de la troisième couche (126) est séparée du résonateur (124) par un espace configuré pour qu'un déplacement de la partie mobile (600) de la structure (102) dans cette direction entraine une variation correspondante d'indice optique effectif du résonateur (124).

13. Dispositif selon l'une quelconque des revendications 10 à 12, dans lequel la partie mobile (602 ; 802 ; 1002) du support (104) est couplée mécaniquement au reste du support (104) par des liaisons souples (608 ; 808 ; 1004) au moins en partie définies dans la première partie (104) de la première couche (106).

14. Dispositif selon la revendication 8 ou 9 prise dans sa dépendance à l'une quelconque des revendications 4 à 6, dans lequel :
la partie mobile (128) de la structure (102) est définie dans la troisième couche (126) ; et
dans une direction parallèle au substrat (100), la partie mobile (128) de la structure (102) est séparée du résonateur (124) par un espace configuré pour qu'un déplacement de la partie mobile (128) de la structure (102) dans cette direction entraine une variation correspondante d'indice optique effectif du résonateur (124).

15. Dispositif selon la revendication 14, dans lequel la partie mobile (128) de la structure est couplée mécaniquement au support (104) par au moins une portion (120) de la troisième couche (126), ladite au moins une portion (120) étant moins rigide que la partie mobile (128).
